# EUROPEAN PATENT APPLICATION

(11) **EP 1 086 794 A2**
(43) Date of publication of application: **28.03.2001**
(21) Application number: 00120500.4
(22) Date of filing: 20.09.2000
(51) Int. Cl.: B28D 1/08

(54) **Diamond wire cutting machine for cutting stone in quarries or reinforced concrete on construction sites and the like**

(30) Priority: 24.09.1999 IT TO990820
(71) Applicant: Brocco, Emilio, 10010 Lessolo (IT)
(72) Inventor: Brocco, Emilio, 10010 Lessolo (IT)
(74) Representative: Aprà, Mario

(57) **Abstract**

The cutting machine according to the invention comprises a frame (11) supporting at one end (11.1) a drive unit (12) with a stationary drive pulley (12.1) turned by a motor/gearbox assembly (12.2). Two idle deflection pulleys (13) are able to travel along respective straight rails (14) fixed to the frame (11). Each deflection pulley (13) is mounted on its own motorized carriage (13.1), which is able to move along the corresponding rail (14). To make the cut, the frame (11) is placed with the drive unit (12) in a proximal position to the material to be cut. A diamond wire (17) is introduced into holes specially made in the material and is formed into an endless loop, running it partly around the drive pulley (12.1), and deflecting it around the deflection pulleys (13), while correct tension is applied to it; the motor/gearbox assembly (12.2) is then turned, and with it the drive pulley (12.1), which sets the diamond wire (17) running, which wire, as it cuts its way through the material, tends to slacken, but is maintained at tension by moving at least one of the deflection pulleys (13) in such a way as to take up the excess length of wire.

## Description

The present invention relates to a diamond-wire cutting machine for cutting stone in quarries or reinforced concrete on construction sites and the like.

Cutting machines of the type indicated are used in quarries for making primary cuts, for example on granite and marble, and for squaring blocks of stone, while on construction sites they can be used for demolishing reinforced concrete.

Known cutting machines comprise a robust carriage structure with driving wheels to propel the machine backwards or forwards along fixed straight tracks for both positioning and working. The carriage supports a unit carrying a flywheel, the translational movement and rotation through 360° of which are effected by electric motors. A diamond cutting wire with a length of e.g. 20-80 m is partially wound in an endless loop around the flywheel, is guided by a pair of fixed idle pulleys whose axes are parallel with that of the flywheel and adjacent to it on opposite sides relative to its axis, and is fed through the material to be cut, for example through specially made holes. It is thus possible to cut the material on a plane containing the loop of diamond wire. To this end, during the working phase, while the diamond wire is being run around the flywheel and is executing the cut, the carriage reverses along the tracks to maintain the constant and correct tensioning of the wire, whose excess length is thus taken up in step with the depth of the cut executed.

However, known diamond-wire cutting machines have the following principal disadvantages:
- they occupy a large amount of space;
- during cutting it is practically impossible to protect the diamond wire as it is taken up, which remains exposed;
- to operate they require a travelway formed of fixed tracks at least equal in length to half the length of the diamond-wire to be taken up during the cut;
- during the cut, their diamond wire has poor grip on the flywheel; and
- on start-up, the pressure exerted by the diamond wire on the material to be cut is too great.

The present invention notes these disadvantages and seeks to provide a solution to them.

The principal object of the present invention is therefore to provide a diamond-wire cutting machine for cutting stone in quarries or reinforced concrete on construction sites and the like, that occupies little space, enables at least a substantial proportion of the diamond wire taken up during the cut to be protected, and that does not require the use of a travelway whose length is at least equal to half the length of the diamond wire to be taken up during the cut.

Another object is to provide a cutting machine as indicated that requires no fixed travelway.

Yet another object is to provide a cutting machine as specified, that exhibits good grip between the diamond wire and the flywheel during the cut and avoids too great a pressure of the wire on the material to be cut, when cutting commences.

A further object is to provide a cutting machine as stated, that can be mounted operationally on a quarry or site vehicle (such as a leveller or the like), giving it convenient mobility both during cutting and at rest.

A further object is to provide a cutting machine as specified that is structurally simple, works safely and reliably and is of reasonable cost.

With a view to these objects, the present invention provides a diamond-wire cutting machine for cutting stone in quarries or reinforced concrete on construction sites and the like, whose essential characteristic forms the subject of the characterizing part of Claim 1.

Other advantageous characteristics are indicated in the dependent claims.

The said claims are to be understood as reproduced here in their entirety.

A fuller account of the present invention is given in the following detailed description with reference to the attached drawings, which are provided purely by way of non-restrictive example. In the drawings:
- Fig. 1 is a side view in the direction of the arrow marked I in Fig. 2, illustrating an example of an embodiment of the diamond-wire cutting machine according to present the invention;
- Fig. 2 is a side view of the machine indicated by arrow II as marked in Fig. 1; and
- Fig. 3 is a schematic side view similar to Fig. 2 showing the diamond-wire cutting machine in accordance with the said example of an embodiment of the invention mounted operationally on a suitably equipped quarry or site vehicle (such as a leveller truck).

Referring to the drawings, the diamond-wire cutting machine according to the invention is denoted 10 as a whole.

The cutting machine 10 comprises a supporting structure which is essentially a flat frame 11 with a fixed cross-member 11.1 at one end on which a drive unit 12 is supported in a fixed central position. This drive unit 12 includes a drive pulley 12.1 whose axis lies in the central vertical longitudinal plane of the frame 11 and is essentially perpendicular to the plane in which the frame itself lies. This drive pulley 12.1 is rotated by an electric motor/gearbox assembly 12.2 via convenient transmission means.

Two idle deflection pulleys 13 that are essentially coplanar with the drive pulley 12.1 and whose axes are parallel with the axis of the latter pulley, are able to travel along respective straight longitudinal fixed rails 14, which are the long members of the said supporting frame 11 and are arranged with mirror symmetry either side of the said central vertical longitudinal plane. Each deflection pulley 13 is mounted on its own motorized carriage 13.1, which travels in both directions along the corresponding rail 14, the latter being in the form of a monorail. The translation of each carriage 13.1 is independent of the translation of the other carriage.

Two idle guide pulleys 15 are supported with respect to the said cross-member 11.1, on the outside of the supporting frame 11, on opposite sides of and with axes essentially parallel to the axis of the drive pulley 12.1. They are also essentially coplanar with this pulley. Each guide pulley 15 is supported on the free end of a rod 16.1 of a corresponding pneumatic or hydraulic actuator 16, whose cylinder is attached to the said cross-member 11.1 with its axis essentially perpendicular to the said central vertical longitudinal plane of the frame 11.

A diamond wire 17 in an endless loop is partially wound around the said drive pulley 12.1, runs around the two travelling deflection pulleys 13 and is guided by the idle guide pulleys 15 which determine its radial distance, on opposite sides, from the axis of the said drive pulley 12.1, within the range of extension of the rods 16.1 of the respective actuators 16.

The supporting frame 11 is provided with adjustable feet 18 to enable it to stand on the ground, as for example when cutting in planes approximately parallel with the ground.

Furthermore, a rotary supporting device 19 comprising a spindle and a thrust bearing is mounted centrally with respect to the supporting frame 11 in such a way that the axis of rotation of its spindle coincides with the intersection between the central vertical longitudinal plane and the central vertical transverse plane of the frame 11.

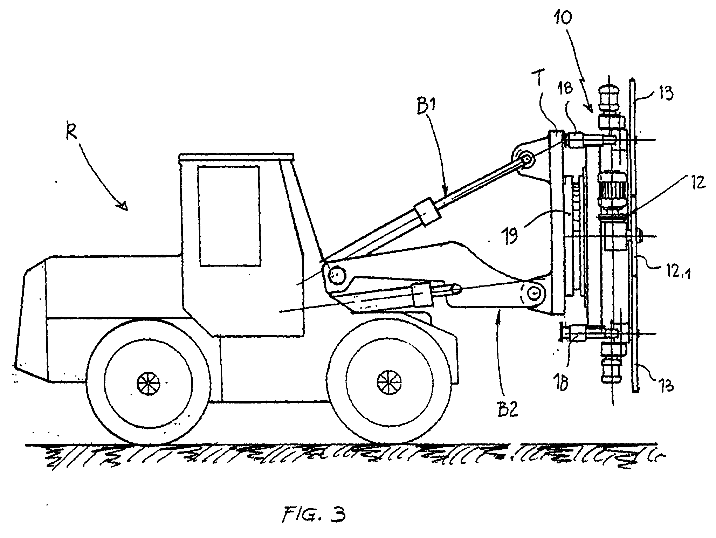

Fig. 3 illustrates the detachable, 360°-rotatable connection of the cutting machine 10, via the thrust bearing of the said rotary supporting device 19, to a quarry or site leveller truck R. In particular, the said thrust bearing is mounted detachably on a carrier frame T supported by pivoting arms B1, B2 attached to the said leveller truck R.

This arrangement enables the cutting machine 10 to be moved at will both during cutting and at rest, in a quarry or on a site, and to be positioned where it can execute - by way of example and depending on requirements - cuts in essentially vertical (as illustrated in Fig. 3) or horizontal planes by orienting the carrier frame T using the arms B1,B2 as required.

Although not illustrated, the cutting machine 10 is provided with a protective housing that surrounds the whole or virtually the whole of the supporting frame 11 with its pulleys 12.1, 13, 15, thereby protecting the diamond wire 17 as it is taken up during cutting.

### Operation:

The cutting machine 10 (standing on the ground or mounted on the leveller truck R) is set up in a stationary position. The end cross-member 11.1 of the frame 11 with the drive unit 12 is placed in the proximal position with respect to the material to be cut, so that the other cross-member is at the greatest possible distance from the material. If necessary, suitable holes are prepared in the material for the diamond wire 17 to pass through, the wire then being introduced into the said holes and formed into an endless loop, running it partly around the drive pulley 12.1. The tension of the diamond wire 17 is then adjusted to the correct level and the cutting operation is commenced by turning the motor/gearbox assembly 12.2 and with it the drive pulley 12.1. The diamond wire 17 is thus set running by the said pulley 12.1 around the idle travelling deflection pulleys 13 and guided around the idle guide pulleys 15 as it cuts into the material. As the diamond wire 17 cuts its way through the material it tends to slacken. To maintain correct tension in the wire, at least one of the travelling deflection pulleys 13 is moved a corresponding amount by its supporting carriage 13.1 towards the distal end of the corresponding rail 14 from the cross-member 11.1 of the frame 11.

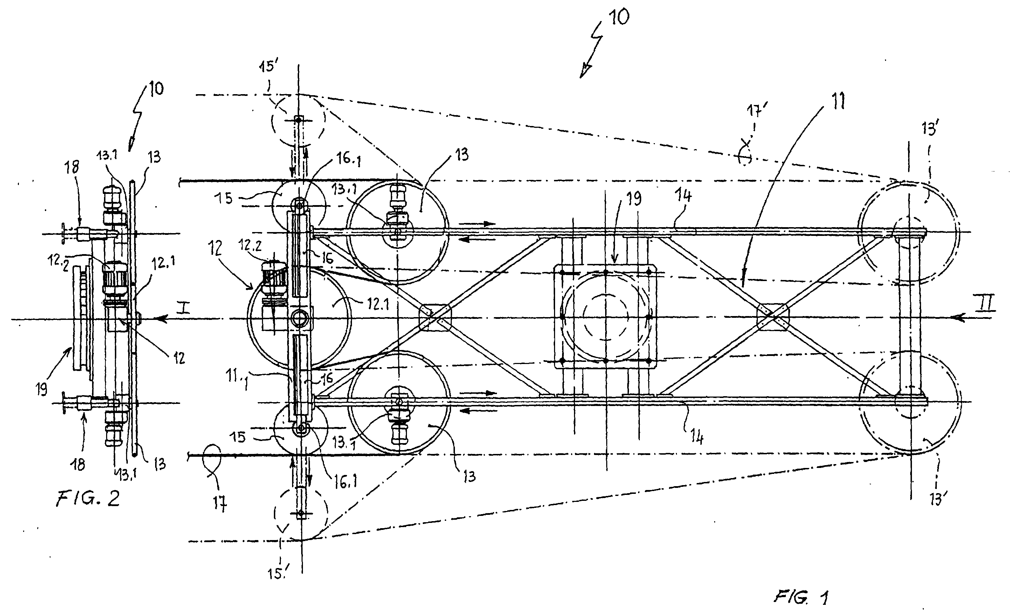

In Fig. 1 the number 13' denotes the said deflection and tensioning pulleys after they have reached the end of their travel as they take up the diamond wire 17' along their respective rails 14, while 15' denotes the said guide pulleys after they have reached the end of their travel as they guide the same diamond wire radially away from the axle of the drive pulley 12.1. In this configuration of maximum take-up and maximum aperture of the diamond wire 17', the said pulleys 13' and 15' and the diamond wire itself are drawn in chain lines.

As will be clear from the above, the mobility of the two travelling deflection pulleys 13 along the rails 14 and towards the distal end of the frame 11 away from the drive pulley 12.1 (the latter being kept in a stationary position on the fixed cross-member 11.1) enables a large amount of diamond wire 17 to be taken up within a significantly reduced amount of space compared with conventional cutting machines, and all within the protective housing of the supporting frame 11. In fact, during cutting, some 24 in of diamond wire 17 is reduced to some 6 m of travel of the deflection pulleys 13 after travelling along their respective rails 14.

The travel of the said deflection pulleys 13 along the rails 14 can be controlled manually by an operator, via remote control of the individual motorized carriages 13.1; or this travel can be controlled by a suitably programmed computerized drive system.

The extension and retraction of the rods 16.1 of the actuators 16 can be controlled in much the same way in order that the diamond wire 17 is always correctly guided and cut with the optimum aperture.

The mutually independent travel of the said deflection pulleys 13 along their respective rails 14 allows optimization of the take-up of the diamond wire because the pulleys can be retracted simultaneously or at different times.

When the cutting operation is over, the travelling deflection pulleys 13 are moved back along the rails 14 to the rest position alongside the drive pulley 12.1.

Clear advantages of the cutting machine 10 are its smaller size and the protection of the cutting wire, which is taken up during cutting, by the protective housing (not shown) which surrounds the frame 11 and its pulleys.

The cutting machine 10 no longer needs a travelway equal to at least half the length of the diamond wire to be taken up during cutting, nor a fixed-track travel way. It can easily be stood on the ground or mounted on a quarry or site vehicle for operational mobility.

Additionally, the deflection pulleys 13 and the guide pulleys 15 ensure better grip between the diamond wire and the drive pulley 12.1 during cutting and less pressure of the diamond wire on the material to be cut when cutting begins.

The cutting machine 10 according to the invention is structurally simple, works safely and reliably and is of reasonable cost.

## Claims

1. Diamond-wire cutting machine for cutting stone in quarries or reinforced concrete on construction sites and the like, characterized in that it comprises a supporting structure which is essentially a flat frame (11) supporting at one end (11.1) a drive unit (12) that includes a stationary drive pulley (12.1), whose axis is essentially perpendicular to the plane in which the frame itself lies and which is rotated by a motor/gearbox assembly (12.2), together with two idle deflection pulleys (13) these being located in a plane essentially parallel with the plane containing the said drive pulley (12.1), having their axes essentially parallel with the axis of the said pulley and being able to travel along respective straight rails (14) fixed to the said frame (11), each travelling deflection pulley (13) being mounted on its own motorized carriage (13.1), which travels in both directions along the corresponding rail (14), the latter being in the form of, for example, a monorail, so that in order to make the cut the said frame (11) is placed with its end (11.1) carrying the drive unit (12) in a proximal position to the material to be cut, in which, if necessary, suitable holes have been prepared for a diamond wire (17) to pass through, the wire then being introduced into these holes and formed into an endless loop, running it partly around the said drive pulley (12.1) and deflecting it around the said travelling deflection pulleys (13), while correct tension is applied to it; the cutting operation is then commenced by turning the said motor/gearbox assembly (12.2) and with it the said drive pulley (12.1), which sets the diamond wire (17) running, which wire, as it cuts its way through the material, tends to slacken, but is maintained at the correct tension by moving at least one of the said travelling deflection pulleys (13) a corresponding amount, on its supporting carriage (13.1), towards the distal end of the corresponding rail (14) from the said end (11.1) of the frame (11), thereby taking up the excess length of wire.

2. Cutting machine according to Claim 1, characterized in that the translation along its rail (14) of the carriage (13.1) of each travelling deflection pulley (13) is independent of the translation of the other carriage.

3. Cutting machine according to Claim 1 or 2, characterized in that it comprises, to guide the diamond wire (17), two idle pulleys (15) supported with respect to the said end (11.1) and on the outside of the said supporting frame (11), on opposite sides of and with axes essentially parallel to the axis of the said drive pulley (12.1), the said guide pulleys (15) being in a plane essentially parallel with the plane containing the said drive pulley (12.1).

4. Cutting machine according to Claim 3, characterized in that each guide pulley (15) is supported on one end of a rod (16.1) of a corresponding actuator (16) whose cylinder is attached to the said end (11.1) of the frame (11), in such a way that the said guide pulleys (15) determine the distance, in an essentially radial direction, of the diamond wire (17) on either side, from the axis of the said drive pulley (12.1), within the range of extension of the rods (16.1) of the respective actuators (16).

5. Cutting machine according to one or more of the preceding claims, characterized in that the said supporting frame (11) is provided with adjustable feet (18) to enable it to stand on the ground, as for example when cutting in planes approximately parallel with the ground.

6. Cutting machine according to one or more of the preceding claims, characterized in that it comprises a rotary supporting device (19) comprising a spindle and a thrust bearing, mounted centrally with respect to the said supporting frame (11), so that the said machine can be operationally mounted detachably and 360°-rotatably on a quarry or site vehicle (leveller truck R).

7. Cutting machine according to Claim 6, characterized in that the said thrust bearing of the rotary supporting device (19) is mounted detachably on a carrier frame (T) supported by pivoting arms (B1, B2) in a quarry or site vehicle (leveller truck R), in such a way that it is possible to move the cutting machine (10) both during cutting and at rest, and to position it where it can execute cuts - by way of example in essentially vertical or horizontal planes - by orienting the said carrier frame (T) by using the said arms (B1, B2) as required.

8. Cutting machine according to any one of the preceding claims, characterized in that it is provided with a protective housing that largely surrounds the said supporting frame (11) with its pulleys (12.1, 13, 15), thereby protecting the diamond wire (17) as it is taken up during cutting.
